# EUROPÄISCHE PATENTSCHRIFT

(11) **EP 1 866 994 B1**
(45) Veröffentlichungstag und Bekanntmachung des Hinweises auf die Patenterteilung: **19.05.2010**
(21) Anmeldenummer: 06722637.3
(22) Anmeldetag: 18.03.2006
(51) Int. Cl.: H01M 8/04, H01M 8/24

(54) **NIEDERTEMPERATUR-BRENNSTOFFZELLENSTAPEL SOWIE VERFAHREN ZUM BETREIBEN DESSELBEN**
LOW-TEMPERATURE FUEL CELL STACK AND METHOD FOR OPERATING THE SAME
PILE DE CELLULES A COMBUSTIBLE A BASSE TEMPERATURE ET PROCEDE PERMETTANT DE FAIRE FONCTIONNER LADITE PILE

(30) Priorität: 06.04.2005 DE 102005015660
(43) Veröffentlichungstag der Anmeldung: 19.12.2007
(73) Patentinhaber: Forschungszentrum Jülich GmbH, 52425 Jülich (DE)
(72) Erfinder: MÜLLER, Martin, 53489 Sinzig (DE); DOHLE, Hendrik, 52249 Eschweiler (DE); MERGEL, Jürgen, 52428 Jülich (DE); WÜSTER, Thorsten, 40625 Düsseldorf (DE); STOLTEN, Detlef, 52076 Aachen (DE)
(86) Internationale Anmeldenummer: PCT/DE2006/000481
(87) Internationale Veröffentlichungsnummer: WO 2006/105752

(56) Entgegenhaltungen:
- US-A1- 2003 228 501
- US-A1- 2004 062 957
- US-A1- 2004 191 583

## Beschreibung

Die Erfindung betrifft einen Niedertemperatur-Brennstoffzellenstapel sowie Verfahren zum Betreiben desselben.

### Stand der Technik

Brennstoffzellstapel nach dem Stand der Technik verfügen üblicherweise über eine zentrale Betriebsmitteleinspeisung. Von dieser aus werden die einzelnen Brennstoffzellen über Zuleitungen versorgt. Das Betriebsmittel wird dann weiter in der Regel über Kanäle in der Bipolarplatte oder über Netzstrukturen über die Fläche der Membran-Elektroden-Einheit (MEA) möglichst gleichförmig verteilt.

Die aus dem Stand der Technik bekannten Vorrichtungen weisen jedoch Nachteile dahingehend auf, dass die angestrebte Gleichverteilung der Betriebsstoffe über die einzelnen Zellen häufig nicht zufriedenstellend realisiert werden kann. Insbesondere in den Zellen gebildete Wassertropfen, Gasblasen und Fertigungsungenauigkeiten führen regelmäßig zu einer Unterversorgung einzelner Brennstoffzellen. Gerade bei Direkt-Methanol-Brennstoffzellen ist jedoch eine präzise und schnelle Steuerung der Methanolkonzentration in den einzelnen Zellen erforderlich, um den Wirkungsgrad und die Leistungsabgabe zu maximieren.

Aus US 2003/228501 A1 ist ein Niedertemperatur-Brennstoffzellenstapel mit einer zentralen Betriebsmitteleinspeisung für die Einzelzellen bekannt, der darüber hinaus eine Speicherungseinrichtung für ein flüssiges Betriebsmittel aufweist. Der Niedertemperatur-Brennstoffzellenstapel umfasst zudem mehrere separat ansteuerbare Dosiereinrichtungen, die mit der Speichereinrichtung verbunden sind. Dadurch kann wenigstens eins der Betriebsmittel gezielt einer Brennstoffeinzelzelle zugeführt werden.

In US 2004/062957 A1 wird eine Methode zur Limitierung des Cross-Overs in einer Niedertemperatur-Brennstoffzelle ofenbart, bei der der Zelle jeweils getrennt der Brennstoff und Wasser über separate Zuführungsleitungen und Dosiereinrichtungen zu Anode geleitet werden, und wobei die Menge an Brennstoff mit einem bestimmten Brennstoff/Wasserverhältnis entsprechend der elektrochemischen Umsetzung an der Anode über die Dosiereinheiten zugeführt wird.

Ebenfalls bekannt aus der US 2004/191583 A1 ist eine Zuführung eines Gemisches aus Methanol und Wsserdampf zu einer Anode einer Niedertemperatur-Brennstoffzelle über eine Dosiereinrichtung, die automatisch über den erzeugten Stromfluss der Zelle gereglet wird.

### Aufgabe und Lösung

Aufgabe der Erfindung ist es, ein Verfahren bereit zu stellen, mit dessen Hilfe die Einstellung von definierten Konzentrationen an Methanol für einzelne Brennstoffzellen in einem Stapel möglich ist. Ferner ist es die Aufgabe der Erfindung, eine entsprechende Vorrichtung zur Durchführung des Verfahrens bereitzustellen.

Die Aufgaben der Erfindung werden gelöst durch einen Niedertemperatur-Brennstoffzellenstapel mit der Gesamtheit an Merkmalen gemäß Hauptanspruch, sowie durch ein Verfahren gemäß Nebenanspruch. Vorteilhafte Ausführungsformen des Verfahrens und des Niedertemperatur-Brennstoffzellenstapels finden sich in den jeweils darauf rückbezogenen Ansprüchenwieder.

### Gegenstand der Erfindung

Die Erfindung betrifft ein Verfahren, mit dessen Hilfe es möglich wird, an einigen Zuführungsstellen zu den einzelnen Brennstoffzellen in einem Niedertemperatur-Brennstoffzellenstapel definierte Konzentration an Brennstoff oder Wasser zur Befeuchtung einzustellen bzw. zur Verfügung zu stellen.

Dazu sind an verschiedenen Stellen innerhalb des Brennstoffzellenstapels Sensoren angeordnet, die in der Lage sind, die Temperatur zu messen. Vorteilhaft können diese Sensoren auch Informationen über die Konzentration des Brennstoffs, der Feuchte des Oxidationsgases oder über die Zellspannung wiedergeben. Diese Informationen dienen als Regelglied für eine oder mehrere Dosiereinrichtungen, die an bestimmten Stellen des Brennstoffzellenstapels angeordnet sind. Als Dosiereinrichtungen sind insbesondere steuerbare Ventile, steuerbare Piezopumpen oder thermisch steuerbare Einspeisungen geeignet.

Für die Dosiereinrichtungen kann auf herkömmliche Mittel zurückgegriffen werden. Das Verfahren zur Dosierung kann beispielsweise ähnlich wie bei einem Bubble-Jet Verfahren erfolgen, z. B. wie bei Tintenstrahldruckern. Hier gibt es im Wesentlichen zwei unterschiedliche Verfahren, um ein Tintentröpfchen zu erzeugen: 1. Piezopumpen oder 2. Pumpen, in denen ein Teil der Tinte über einen kurzzeitigen hohen Energieeintrag verdampft und so die Tinte aus dem Düsenkopf ausgetrieben wird. Eine auf diese Art funktionierende Dosiereinrichtung ist im Rahmen dieser Erfindung mit einer thermisch steuerbaren Einspeisung gemeint.

Die Dosiereinrichtungen sind jeweils an eine zusätzliche Zuführung- bzw. Speicherungseinrichtung angeschlossen, die mit einem Betriebsmittel, Brennstoff oder Oxidationsmedium, gefüllt ist. Diese Zuführungs- bzw. Speicherungsvorrichtung kann insbesondere eine weitere Betriebsmittelleitung sein, die beispielsweise in ein Reservoir mündet.

Während des Betriebs eines Niedertemperatur-Brennstoffzellenstapels werden über die übliche zentrale Zuführungsleitung die Betriebsstoffe zu den Einzelzellen geleitet. An geeigneten Stellen eingebaute Sensoren ermitteln vorteilhaft jeweils die festgesetzten Regelungsinformationen, wie z. B. die lokalen Konzentrationen an Betriebsmittel, den Feuchtigkeitsgehalt des Oxidationsmediums oder auch entsprechende Zellspannungen einzelner Zellen. Ermittelt ein Sensor eine Abweichung von einem vorher definierten Sollwert, führt dies zu einer Steuerung einer Dosiereinheit, die diesem Sensor zugeordnet und vorteilhaft in räumlicher Nähe zu diesem angeordnet ist. Eine Unterversorgung mit einem Betriebsmittel, insbesondere mit Brennstoff, die sich in einer geringeren Konzentration bezogen auf den Sollwert an einem Sensor ergibt, führt zu einer Ansteuerung der entsprechenden Dosiereinheit, die daraufhin zusätzlich Brennstoff an diese Stelle einspeist. Bei einer zu geringen Feuchtigkeit des Oxidationsmittels kann über die Dosiereinheiten beispielsweise Wasser zugeführt werden.

Die Dosierung selbst kann nach herkömmlichen Regelalgorithmen erfolgen. Denkbar ist sowohl eine pulsweise Zudosierung oder aber auch eine kontinuierliche Zudosierung, bis der Sensor ein Signal ermittelt, welches dem vorgegebenen Sollwert entspricht. Dadurch wird die Dosiereinheit gestoppt. Denkbar ist aber auch eine Regelung, die anstelle eines vorgegebenen Sollwertes mit mehreren Grenzwerten arbeitet. Die Dosierung für Brennstoff erfolgt dabei vorteilhaft mit konzentriertem Brennstoff, d. h. bei einer Methanol-Wasser-Brennstoffzelle insbesondere mit hochkonzentriertem oder sogar reinem Methanol.

Der erfindungsgemäße Niedertemperatur-Brennstoffzellenstapel weist zusätzlich zur üblichen zentralen Zuführung von Betriebsmitteln wenigstens eine weitere Zuführungs- bzw. Speicherungseinrichtung für ein flüssiges Betriebsmittel, insbesondere einen flüssigen Brennstoff oder Wasser auf. Diese Einrichtung kann beispielsweise eine weitere Zuführungsleitung sein, die insbesondere mit einem höher konzentrierten Brennstoff gespeist wird.

Das neue Konzept für einen Direkt-Methanol-Brennstoffzellenstapel sieht folgende technische Merkmale vor:
- Der Brennstoffzellenstapel verfügt über wenigstens einen zusätzlichen inneren Raum zur Speicherung eines flüssigen Betriebsstoffes, insbesondere über eine weitere Zuführungs- bzw. Speicherungseinrichtung für ein flüssiges Betriebsmittel;
- bei den flüssigen Betriebsmitteln handelt es sich insbesondere um Methanol, eine hochkonzentrierte Methanollösung oder auch Wasser;
- der innere Raum ist an mehreren Stellen mit Dosiereinrichtungen verbunden;
- die Dosiereinrichtungen münden in eine Zuführungsleitung, die ein Betriebsmittel zu den Einzelzellen führt;
- die Dosiereinrichtungen sind separat ansteuerbar;
- bei den Dosiereinrichtungen handelt es sich insbesondere um Piezopumpen oder um thermisch gesteuerte Einspeisungen oder um entsprechend gesteuerte Ventile;
- die Ventile oder Pumpen sind durch eine Steuerung, die Informationen über die Last- und Betriebszustände der einzelnen Zellen zusammenführt, gesteuert.

Mit diesen grundsätzlichen technischen Merkmalen lassen sich vorteilhaft ortsaufgelöst die Konzentrationen an Betriebsmittel für den Zulauf zu den einzelnen Brennstoffzellen einstellen.

Der vorgenannte Aufbau des Niedertemperatur-Brennstoffzellenstapels lässt sich sowohl auf der Anodenseite für die Dosierung des Brennstoffs, als auch vorteilhaft auf der Kathodenseite einsetzen, wobei als flüssiges Medium dann vorteilhaft Wasser zu Befeuchtungszwecken zum Einsatz kommt.

### Spezieller Beschreibungsteil

Nachfolgend wird der Gegenstand der Erfindung anhand von Figuren näher erläutert, ohne dass der Gegenstand der Erfindung dadurch beschränkt wird.

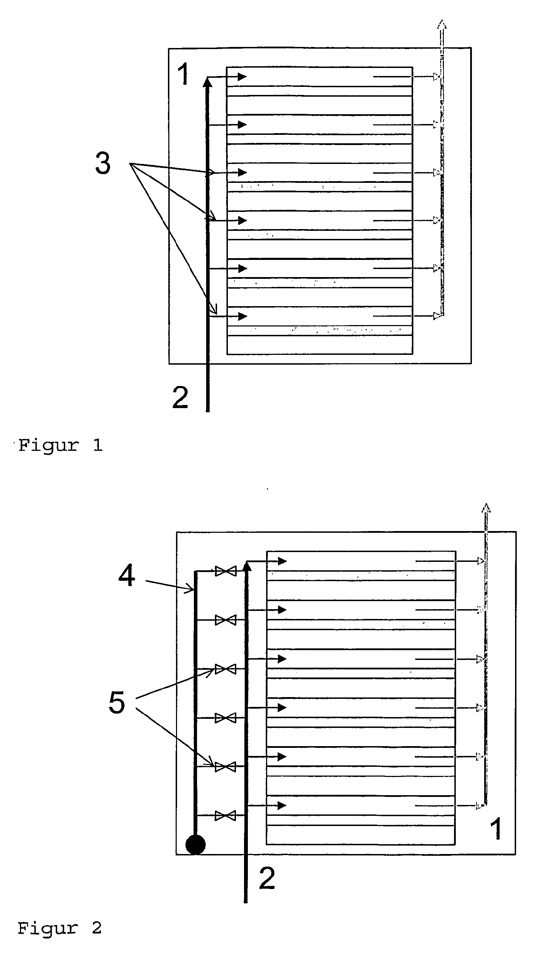

In Figur 1 ist der Stand der Technik für die Verteilung eines Betriebsmittels zu einzelnen Brennstoffzellen in einem Brennstoffzellenstapel 1 dargestellt. Die Verteilung der Betriebsmittel ist durch einzelne Pfeile angedeutet. Das Betriebsmittel, beispielsweise der Brennstoff, gelangt zunächst über eine zentrale Betriebsmitteleinspeisung 2, die dann in die einzelnen Verteilerkanäle 3 zu den Einzelzellen abzweigt. Der entsprechende Abfluss aus den Einzelzellen und dem Brennstoffzellenstapel ist grau angedeutet.

Die Figur 2 zeigt demgegenüber die Verbesserung der Einstellung der lokalen Konzentration des Betriebsmittels, durch die zusätzliche Einspeisung eines Betriebsmittels, insbesondere eines hoch konzentrierten Betriebsmittels wie beispielsweise reines Methanol, über die Dosiereinrichtungen 5. Die Dosiereinrichtungen sind an eine oder mehrere weitere zusätzliche Zuführungs- bzw. Speicherungseinrichtungen 4 für ein flüssiges Betriebsmittel verbunden, und werden darüber mit dem Betriebsmittel versorgt. Die Zuführungs- bzw. Speicherungseinrichtung kann beispielsweise ein weiterer Kanal und/oder auch ein in der Platte liegender Hohlraum (Reservoir) sein. Die Dosiereinrichtungen münden vorteilhaft nahe der Abzweigungen zu den Verteilerkanälen in die zentrale Betriebsmitteleinspeisung, oder sogar direkt in diese, so dass die gewünschte Konzentration gezielt für eine Brennstoffeinzelzelle bzw. für ein Zellpaket eingestellt werden kann.
Durch geeignet eingebaute Sensoren kann eine punktgenaue Steuerung bzw. Regelung der Versorgung mit einem Betriebsmittel erfolgen, sofern die Sensorinformationen an die einzeln ansteuerbaren Dosiereinrichtungen erfolgen.

## Patentansprüche

1. Niedertemperatur-Brennstoffzellenstapel mit einer zentralen Betriebsmitteleinspeisung für die Einzelzellen, **dadurch gekennzeichnet,**
a. **dass** der Brennstoffzellenstapel eine weitere Zuführungs-bzw. Speicherungseinrichtung für ein flüssiges Betriebsmittel aufweist, und
b. **dass** der Brennstoffzellenstapel mehrere separat ansteuerbare Dosiereinrichtungen umfasst, die mit der weiteren Zuführungs- bzw. Speicherungseinrichtung verbunden sind und in die zentrale Betriebsmitteleinspeisung münden, und
c. diese Dosiereinrichtungen mit Sensoren verbunden sind, die die Temperatur zu messen vermögen.

2. Niedertemperatur-Brennstoffzellenstapel nach Anspruch 1, mit wenigstens einem steuerbaren Ventil, einer steuerbaren Piezopumpe oder einer thermisch steuerbaren Einspeisung als Dosiereinrichtung.

3. Niedertemperatur-Brennstoffzellenstapel nach einem der Ansprüche 1 bis 2, bei dem die Dosiereinrichtungen jeweils an der Stelle in die Betriebsmitteleinspeisung münden, an denen die Verteilung zu den einzelnen Zellen erfolgt.

4. Niedertemperatur-Brennstoffzellenstapel nach Anspruch 1 bis 3, mit einer Zuführungs- bzw. Speicherungseinrichtungen zur Zuführung von Methanol oder einer hochkonzentrierten Methanollösung.

5. Niedertemperatur-Brennstoffzellenstapel nach Anspruch 1 bis 3, mit einer Zuführungs- bzw. Speicherungseinrichtung zur Zuführung von Wasser.

6. Niedertemperatur-Brennstoffzellenstapel nach einem der Ansprüche 1 bis 6, mit Sensoren als Regeleinrichtung für die Dosiereinrichtungen.

7. Niedertemperatur-Brennstoffzellenstapel nach einem der Ansprüche 1 bis 6, bei der jeweils ein Sensor und die durch diesen Sensor gesteuerte Dosiereinrichtung benachbart angeordnet sind.

8. Verfahren zum Betreiben eines Niedertemperatur-Brennstoffzellenstapels nach einem der Ansprüche 1 bis 7, bei dem die separat ansteuerbaren Dosiereinrichtungen über Sensoren, die Temperatur zu messen vermögen, separat gesteuert werden, und über die separat ansteuerbaren Dosiereinrichtungen wenigstens einer Brennstoffeinzelzelle gezielt ein Betriebsmittel zugeführt wird.

9. Verfahren nach Anspruch 8, bei dem jeder Brennstoffeinzelzelle gezielt ein Betriebsmittel über eine Dosiereinrichtung zugeführt wird.

10. Verfahren nach Anspruch 8 bis 9, bei dem Methanol oder eine hochkonzentrierte Methanollösung zugeführt wird.

11. Verfahren nach Anspruch 8 bis 10, bei dem jede Dosiereinrichtung über einen jeweils benachbart angeordneten Sensor separat gesteuert wird.

## Claims

1. A low-temperature fuel cell stack having a central operating-medium supply system for the individual cells, **characterized in that**
a. the fuel cell stack has an additional supply or storage device for a liquid operating medium, and
b. the fuel cell stack includes a plurality of separately controllable dosing devices, which are connected to the additional supply or storage device and lead into the central operating-medium supply system, and
c. said dosing devices are connected to sensors capable of measuring the temperature.

2. A low-temperature fuel cell stack according to Claim 1, having at least one controllable valve, a controllable piezo pump or a thermally controllable feeder as dosing device.

3. A low-temperature fuel cell stack according to one of Claims 1 or 2, in which the dosing devices each lead into the operating-medium supply system at the point at which distribution to the individual cells occurs.

4. A low-temperature fuel cell stack according to Claims 1 to 3, having a supply or storage device for the supply of methanol or of a highly concentrated methanol solution.

5. A low-temperature fuel cell stack according to Claims 1 to 3, having a supply or storage device for the supply of water.

6. A low-temperature fuel cell stack according to one of Claims 1 to 6, with sensors as control devices for the dosing devices.

7. A low-temperature fuel cell stack according to one of Claims 1 to 6, in which a sensor and the dosing device controlled by said sensor are respectively located side by side.

8. A method of operating a low-temperature fuel cell stack according to one of Claims 1 to 7, in which the separately controllable dosing devices are separately controlled via sensors which are capable of measuring temperature, and an operating medium is specifically supplied to at least one individual fuel cell via the separately controllable dosing devices.

9. A method according to Claim 8, in which an operating medium is specifically supplied to each individual fuel cell via a dosing device.

10. A method according to Claims 8 and 9, in which methanol or a highly concentrated methanol solution is supplied.

11. A method according to Claims 8 to 10, in which each dosing device is separately controlled via a respective sensor located at the side of it.

## Revendications

1. Pile de cellules à combustible basse température pourvue d'une alimentation centrale en carburant pour les cellules individuelles, **caractérisée**
a. **en ce que** ladite pile de cellules à combustible comporte un autre dispositif d'amenée ou de stockage pour une alimentation de service en carburant liquide, et
b. **en ce que** la pile de cellules à combustible comprend plusieurs dispositifs de dosage pouvant être commandés séparément, lesquels sont reliés à l'autre dispositif d'amenée ou de stockage et débouchent dans l'alimentation centrale en carburant, et
c. **en ce que** lesdits dispositifs de dosage sont reliés à des capteurs aptes à mesurer la température.

2. Pile de cellules à combustible basse température selon la revendication 1, pourvue d'au moins une soupape pouvant être commandée, d'une pompe piézo-électrique pouvant être commandée ou d'une alimentation à commande thermique en tant que dispositif de dosage.

3. Pile de cellules à combustible basse température selon l'une des revendications 1 et 2, où les dispositifs de dosage débouchent chacun à l'emplacement de l'alimentation en carburant où est réalisée la distribution vers les cellules individuelles.

4. Pile de cellules à combustible basse température selon les revendications 1 à 3, pourvue d'un dispositif d'amenée ou de stockage pour l'amenée de méthanol ou d'une solution de méthanol hautement concentrée.

5. Pile de cellules à combustible basse température selon les revendications 1 à 3, pourvue d'un dispositif d'amenée ou de stockage pour l'amenée d'eau.

6. Pile de cellules à combustible basse température selon l'une des revendications 1 à 5, pourvue de capteurs en tant que dispositif de régulation pour les dispositifs de dosage.

7. Pile de cellules à combustible basse température selon l'une des revendications 1 à 6, où chaque capteur et chaque dispositif de dosage commandé par ledit capteur sont contigus.

8. Procédé pour la mise en service d'une pile de cellules à combustible basse température selon l'une des revendications 1 à 7, où les dispositifs de dosage pouvant être commandés séparément sont commandés séparément au moyen de capteurs aptes à mesurer la température, et où un carburant est amené de manière ciblée au moins à une cellule à combustible individuelle au moyen des dispositifs de dosage pouvant être commandés séparément.

9. Procédé selon la revendication 8, où un carburant est amené de manière ciblée à chaque cellule à combustible individuelle au moyen d'un dispositif de dosage.

10. Procédé selon les revendications 8 à 9, où du méthanol ou une solution de méthanol hautement concentrée sont amenés.

11. Procédé selon les revendications 8 à 10, où chaque dispositif de dosage est commandé séparément par un capteur correspondant contigu.
